# EUROPÄISCHE PATENTANMELDUNG

(11) **EP 3 035 149 A1**
(43) Veröffentlichungstag der Anmeldung: **22.06.2016**
(21) Anmeldenummer: 14199246.1
(22) Anmeldetag: 19.12.2014
(51) Int. Cl.: G06F 1/16

(54) **Tablet PC mit Standeinrichtung**

(71) Anmelder: Medion AG, 45307 Essen (DE)
(72) Erfinder: Reineke, Andreas Hubert, 33100 Paderborn (DE)
(74) Vertreter: Schweiger, Johannes

(57) **Zusammenfassung**

Die vorliegende Erfindung betrifft einen Tablet PC, aufweisend einen Körper (2) und eine am Körper (2) befestigte Standeinrichtung (31, 32) zur Aufstellung des Tablet PCs (1) auf einer Oberfläche in mindestens einer Standposition, wobei die Standeinrichtung (31, 32) in Bezug auf den Körper (2) schwenkbar ausgebildet ist.

## Beschreibung

Die vorliegende Erfindung betrifft einen Tablet PC sowie eine Standeinrichtung für einen Tablet PC.

Tablet PCs sind aus dem Stand der Technik bekannt. Tablet PCs werden meistens in der Hand gehalten. Wenn jedoch beispielsweise Bilder oder Filme betrachtet werden sollen, ist es für den Benutzer komfortabler, wenn er den Tablet PC beispielsweise auf einen Tisch aufstellen kann. Allerdings bieten herkömmliche Standeinrichtungen nicht die Möglichkeit, den Tablet PC sowohl in der Landscape-Ausrichtung als auch in der Porträt-Ausrichtung aufzustellen. Die Verwendungsmöglichkeiten sind daher im Stand der Technik erheblich eingeschränkt.

Es ist daher die Aufgabe der vorliegenden Erfindung, einen Tablet PC mit einer Standeinrichtung zur Verfügung zu stellen, welcher die Nachteile aus dem Stand der Technik nicht aufweist und insbesondere sowohl ein Aufstellen des Tablet PC in der Landscape-Ausrichtung als auch in der Portrait-Ausrichtung ermöglicht.

Dieser Aufgabe wird mit dem Tablet PC und der Standeinrichtung für einen Tablet PC gemäß den nebengeordneten Ansprüchen gelöst.

Vorteilhafte Weiterbildungen der Erfindung sind in den Unteransprüchen angegeben. In den Rahmen der Erfindung fallen auch sämtliche Kombinationen aus zumindest zwei in der Beschreibung, in den Ansprüchen und/oder den Zeichnungen angegebenen Merkmalen. Bei angegebenen Wertebereichen sollen auch innerhalb der genannten Grenzen liegende Werte als Grenzwerte offenbart gelten und in beliebiger Kombination beanspruchbar sein.

Erfindungsgemäß ist der Tablet PC derart ausgebildet, dass er einen Körper und eine am Körper befestigte Standeinrichtung zur Aufstellung des Tablet PCs auf einer Oberfläche in mindestens einer Standposition aufweist, wobei die Standeinrichtung in Bezug auf den Körper schwenkbar ausgebildet ist, wobei die Standeinrichtung an unterschiedlichen Seitenkanten des Körpers schwenkbar befestigt ist.

Der Begriff Tablet PCs umfasst im Folgenden alle Arten von elektronischen Geräten, die von einem Benutzer per Hand bedient werden können wie zum Beispiel Smartphones, Handys, elektronische Bilderrahmen, elektronische Fotoapparate etc.

Die Oberfläche kann zum Beispiel eine Tischoberfläche sein. Mit einer Standposition ist eine Position gemeint, in der der Tablet PC auf die Oberfläche aufgestellt werden kann, so dass ein Benutzer den Tablet PC betrachten oder bedienen kann, ohne den Tablet PC mit seiner Hand festzuhalten.

Der Grundgedanke der Erfindung besteht insbesondere darin, dass die Schwenkbarkeit der Standeinrichtung in Bezug auf den Körper ein flexibles Aufstellen des Tablet PCs ermöglicht, je nach dem welche Lage beziehungsweise welche Position vom Benutzer gewünscht ist. Durch die schwenkbare Befestigung der Standeinrichtung an unterschiedlichen Seitenkanten des Körpers ist es vorteilhaft möglich, dass der Tablet PC wahlweise durch den Benutzer entweder in die Landscape-Ausrichtung oder in die Portrait-Ausrichtung geschwenkt werden kann.

Es kann insbesondere vorgesehen sein, dass die Standeinrichtung an genau zwei unterschiedlichen Seitenkanten des Körpers schwenkbar befestigt ist. Insbesondere ist die Standeinrichtung an zwei benachbarten Seitenkanten des Körpers schwenkbar befestigt.

Es kann in einer Weiterbildung der Erfindung vorgesehen sein, dass die Standeinrichtung an, insbesondere genau zwei, diagonal gegenüberliegenden Ecken des Körpers schwenkbar befestigt ist.

In einer bevorzugten Ausführungsform ist die, insbesondere integral mit dem Tablet PC ausgebildete, Standeinrichtung wahlweise in unterschiedliche Standpositionen schwenkbar. Dadurch können vorteilhaft unterschiedliche Positionen beziehungsweise Lagen des Tablet PCs eingestellt werden, so dass die Betrachtung beziehungsweise Bedienung des Tablet PCs komfortabel gestaltet werden kann.

Insbesondere kann es vorgesehen sein, dass die Standeinrichtung stufenlos verschwenkbar ist. Dadurch kann der Benutzer vorteilhaft die gewünschte Standposition je nach Bedarf einstellen. Alternativ kann es vorgesehen sein, dass die Standeinrichtung rastend verschwenkbar ist. Insbesondere kann die Standeinrichtung in mehrere Rastpositionen schwenkbar sein. Dadurch kann der Benutzer vorteilhaft die gewünschte Standposition je nach Bedarf einstellen. Insbesondere verläuft eine Schwenkachse der Standeinrichtung schräg zu mindestens einer Seitenkante, vorzugsweise zu allen Seitenkanten, des Tablet PC. Bevorzugt verläuft die Schwenkachse entlang einer oder parallel zu einer durch zwei benachbarte Seitenkanten des Tablet PC gebildeten Hypotenuse.

In einer Weiterbildung ist es vorgesehen, dass die Standeinrichtung in eine Handhabungsposition schwenkbar ist, wobei die Standeinrichtung in der Handhabungsposition bevorzugt am Körper, insbesondere an Seitenkanten des Körpers, anliegt. In der Handhabungsposition wird die Standeinrichtung nicht mehr benötigt, so dass sie zur Erleichterung der Handhabung an den Körper angelegt werden kann. Insbesondere kann die Standeinrichtung an die Seitenkanten des Körpers angelegt werden, so dass die Handhabung des Tablet PCs erheblich erleichtert wird. Insbesondere kann die Standeinrichtung in der Handhabungsposition am Körper, insbesondere an den Seitenkanten des Körpers, befestigt werden. Bei Bedarf kann die Standeinrichtung vom Körper gelöst und in die Standposition geschwenkt werden. Insbesondere kann die Standeinrichtung, insbesondere lösbar, mit einer Klipps-und/oder Rastverbindung oder magnetisch am Körper befestigt werden.

Die Standeinrichtung ist gemäß einer vorteilhaften Ausführung in einer Handhabungsposition so angeordnet, dass sie zumindest überwiegend, vorzugsweise vollständig, zwischen einer durch eine Vorderseite gebildeten Bedienebene und einer durch eine Rückseite gebildeten Auflageebene liegt.

In einer anderen Weiterbildung ist es vorgesehen, dass der Tablet PC in einer Landscape-Ausrichtung und einer Portrait-Ausrichtung aufstellbar ist. Die Landscape-Ausrichtung ist diejenige Lage, in der sich der Tablet PC befindet, wenn er mit seiner langen Seitenkante horizontal ausgerichtet ist. Dementsprechend befindet sich der Tablet PC in seiner Portrait-Ausrichtung, wenn er mit seiner kurzen Seitenkante horizontal ausgerichtet ist. Dadurch kann der Tablet PC vorteilhaft wahlweise in der Landscape-Ausrichtung oder in der Portrait-Ausrichtung aufgestellt werden, wobei lediglich die Standeinrichtung verschwenkt werden muss beziehungsweise der Tablet PC umgedreht und die Standeinrichtung passend verschwenkt werden muss.

Insbesondere kann es vorgesehen sein, dass die Standeinrichtung über, insbesondere genau zwei, Drehgelenke schwenkbar am Körper befestigt ist. Die Drehgelenke erlauben ein besonders einfaches Schwenken der Standeinrichtung. Die Drehgelenke können auf vielfältige Art mit dem Körper verbunden sein, insbesondere können sie mit dem Körper verschraubt, verklebt, formschlüssig verbunden und/oder an den Körper angeklipst sein.

In einer Weiterbildung ist es vorgehen, dass die Standeinrichtung L-förmig mit einem langen Schenkel und einem kurzen Schenkel ausgebildet ist. Durch diese Ausbildung kann die Standeinrichtung besonders stabil auf der Oberfläche aufliegen und auf einfache Weise an den Körper angelegt werden. Außerdem kann durch diese Ausbildung der Tablet PC sowohl in der Landscape-Ausrichtung als auch in der Portrait-Ausrichtung aufgestellt werden.

In einer Weiterbildung ist es vorgehen, dass die Standeinrichtung L-förmig mit zwei gleich langen Schenkeln ausgebildet ist. Durch diese Ausbildung kann die Standeinrichtung besonders stabil auf der Oberfläche aufliegen und auf einfache Weise an den Körper angelegt werden.

Insbesondere kann es vorgesehen sein, dass jeder Schenkel mit seinem freien Ende schwenkbar, insbesondere über ein Drehgelenk, am Körper befestigt ist. Jeder Schenkel hat ein freies Ende und ein verbundenes Ende. Die Schenkel sind an ihren verbundenen Enden miteinander verbunden. Jedes freie Ende ist dem jeweiligen verbundenen Ende abgewandt bzw. diesem entgegengesetzt angeordnet.

Es kann insbesondere vorgesehen sein, dass die Längen der Schenkel den Seitenlängen bzw. Kantenlängen des Körpers entsprechen. Mit anderen Worten: die Schenkel sind in etwa so lang wie die entsprechenden Seitenlängen des Körpers, an denen die Schenkel in der Handhabungsposition anliegen. Dadurch ist es vorteilhaft möglich, dass die Standeinrichtung beziehungsweise die Schenkel besonders leicht an den Körper angelegt werden können, wenn die Standeinrichtung in die Handhabungsposition geschwenkt werden soll.

Insbesondere kann es vorgesehen sein, dass in der Handhabungsposition zwei Seitenkanten, die insbesondere Bedienelemente und/oder Anschlusselemente des Tablet PC aufweisen, frei bleiben.

Insbesondere kann es vorgesehen sein, dass in der Handhabungsposition einer oder beide der Schenkel der Standeinrichtung Zubehörteile des Tablet PCs verdecken und/oder sichern (z.B. einen Bedienstift für ein Touchpanel).

Ein weiterer Gegenstand der vorliegenden Erfindung betrifft eine Standeinrichtung für einen Tablet PC nach einer der vorhergehenden Ausführungsformen. Für diese Standeinrichtung gilt das oben zum Tablet PC Ausgeführte.

Weitere Vorteile, Merkmale und Einzelheiten der Erfindung ergeben sich aus der nachfolgenden Beschreibung bevorzugter Ausführungsbeispiele sowie anhand der Zeichnungen. Diese zeigen schematisch in:
- Figur 1A: eine Rückansicht eines erfindungsgemäßen Tablet PCs gemäß einer beispielhaften Ausführungsform,
- Figur 1B: den Tablet PC aus Figur 1A in einer Seitenansicht von links,
- Figur 1C: den Tablet PC aus Figur 1A in einer Seitenansicht von hinten,
- Figur 1D: den Tablet PC aus Figur 1A in einer Seitenansicht von rechts,
- Figur 1E: den Tablet PC in einer Seitenansicht von vorne,
- Figur 2A: den Tablet PC in einer perspektivischen Ansicht,
- Figur 2B: den Tablet PC in einer anderen perspektivischen Ansicht,
- Figur 3: den Tablet PC in einer Rückansicht in der Landscape-Ausrichtung,
- Figur 4: den Tablet PC in der Portrait-Ausrichtung

In den Figuren sind gleiche Bauteile und Merkmale beziehungsweise Bauteile mit den gleichen Funktionen mit den gleichen Bezugszeichen gekennzeichnet.

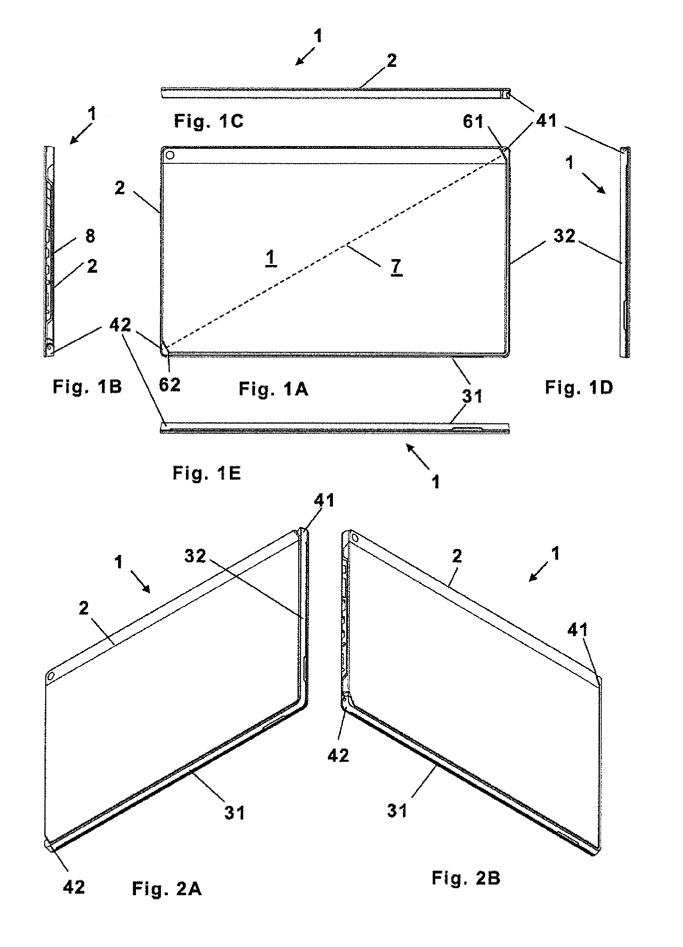

Die Figuren 1A bis 2B zeigen einen Tablet PC 1 mit einem Körper 2, einer Standeinrichtung, die einen langen Schenkel 31 und einen kurzen Schenkel 32 aufweist, einem ersten Drehgelenk 41 und einem zweiten Drehgelenk 42. Die Schenkel 31, 32 liegen an den Seitenkanten des Körpers 2 an, so dass sich der Tablet PC 1 und die Standeinrichtung beziehungsweise die Schenkel 31, 32 in einer Handhabungsposition befinden. An einer anderen Seitenkante des Körpers 2 sind Bedienelemente und Anschlusselemente 8 angeordnet. Die Schenkel 31, 32 sind L-förmig miteinander verbunden. An ihren freien Enden sind die Schenkel 31, 32 über die Drehgelenke 41, 42 mit dem Körper 2 verbunden. Die Schenkel 31, 32 liegen in der Handhabungsposition an den Seitenkanten der Körpers 2, insbesondere bündig, an. Die Drehgelenke 41, 42 sind mit dem Körper 2 verschraubt oder verklipst. Der Körper 2 weist zwei Rücksprünge 61,62 zur Aufnahme der Drehgelenke 41,42 auf, die parallel zu einer Schwenkachse 7 der Standeinrichtung verlaufen.

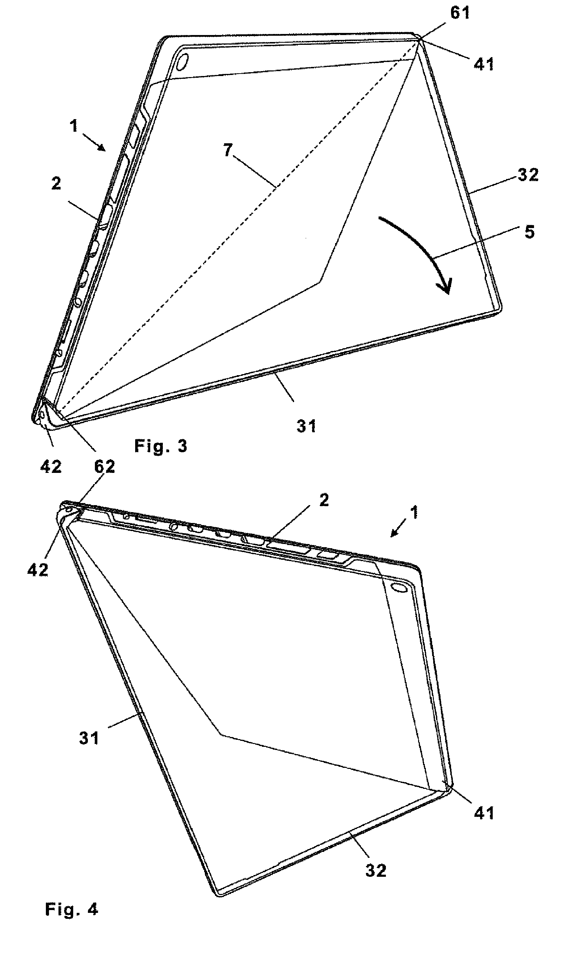

Die Figur 3 zeigt den Tablet PC 1 in einer Landscape-Ausrichtung, das heißt die lange Seitenkante ist horizontal ausgerichtet. Die Schenkel 31, 32 befinden sich in einer Standposition, so dass der Tablet PC 1 beziehungsweise der Körper 2 auf einer Oberfläche aufgestellt werden kann. Die Schenkel 31, 32 bieten dem Körper 2 derart hohe Stabilität, dass der Körper nicht umkippen kann. Der Schenkel 31 ist über das Drehgelenk 42 in einem Winkel vom Körper 2 weggeschwenkt. Ebenso ist der Schenkel 32 in einem Winkel über das Drehgelenk 41 vom Körper 2 weggeschwenkt. Die Schwenkbewegung der Schenkel 31, 32, beispielsweise aus der Handhabungsposition aus der Figur 1A in die Standposition aus der Figur 3, um die Schwenkachse 7 ist mit einem Pfeil 5 angedeutet. Die Schenkel 31, 32 wurden also gemäß dem Pfeil 5 um die Schwenkachse 7 vom Körper 2 weggeschwenkt, so dass der Körper 2 beziehungsweise der Tablet PC 1 auf dem Schenkel 31 abgestellt werden kann.

Figur 4 zeigt den Tablet 1 in der Portrait-Ausrichtung, bei der die kurze Seitenkante horizontal ausgerichtet ist. Die Schenkel 31, 32 befinden sich in einer anderen Standposition im Vergleich zur Figur 3. In der Figur 4 ist der Körper 2 auf dem kurzen Schenkel 32 aufgestellt. Die Schenkel 31, 32 können stufenlos verschwenkt werden, so dass auch unterschiedliche Winkel eingestellt werden können. Dadurch kann der Körper 2 in unterschiedlichen Winkeln zur Oberfläche aufgestellt werden. Der maximal einstellbare Winkel zwischen den Seitenkanten und den Schenkeln 31,32 beträgt 90°.

### Bezugszeichenliste

- 1: Tablet PC
- 2: Körper
- 31: langer Schenkel
- 32: kurzer Schenkel
- 41, 42: Drehgelenke
- 5: Pfeil
- 61, 62: Rücksprünge
- 7: Schwenkachse
- 8: Bedienelemente, Anschlusselemente

## Patentansprüche

1. Tablet PC (1), aufweisend einen Körper (2) und eine am Körper (2) befestigte Standeinrichtung (31, 32) zur Aufstellung des Tablet PCs (1) auf einer Oberfläche in mindestens einer Standposition, wobei die Standeinrichtung (31, 32) in Bezug auf den Körper (2) schwenkbar ausgebildet ist, wobei die Standeinrichtung (31,32) an unterschiedlichen Seitenkanten des Körpers (2) schwenkbar befestigt ist.

2. Tablet PC (1) nach Anspruch 1, **dadurch gekennzeichnet, dass** die Standeinrichtung (31,32) an genau zwei unterschiedlichen Seitenkanten des Körpers (2) schwenkbar befestigt ist.

3. Tablet PC (1) nach einem der vorhergehenden Ansprüche, **dadurch gekennzeichnet, dass** die Standeinrichtung (31,32) an zwei benachbarten Seitenkanten des Körpers (2) schwenkbar befestigt ist.

4. Tablet PC (1) nach einem der vorhergehenden Ansprüche, **dadurch gekennzeichnet, dass** die Standeinrichtung (31,32) wahlweise in unterschiedliche Standpositionen schwenkbar ist.

5. Tablet PC (1) nach einem der vorhergehenden Ansprüche, **dadurch gekennzeichnet, dass** die Standeinrichtung (31,32) stufenlos schwenkbar ist.

6. Tablet PC (1) nach einem der vorhergehenden Ansprüche, **dadurch gekennzeichnet, dass** die Standeinrichtung (31,32) in mehrere Rastpositionen schwenkbar ist.

7. Tablet PC (1) nach einem der vorhergehenden Ansprüche, **dadurch gekennzeichnet, dass** die Standeinrichtung (31,32) in eine Handhabungsposition schwenkbar ist, wobei die Standeinrichtung (31,32) in der Handhabungsposition am Körper (2), insbesondere an Seitenkanten des Körpers (2), anliegt.

8. Tablet PC (1) nach einem der vorhergehenden Ansprüche, **dadurch gekennzeichnet, dass** der Tablet PC (1) in einer Landscape-Ausrichtung und in einer Porträt-Ausrichtung aufstellbar ist.

9. Tablet PC (1) nach einem der vorhergehenden Ansprüche, **dadurch gekennzeichnet, dass** die Standeinrichtung (31, 32) an, insbesondere zwei, diagonal gegenüberliegenden Ecken des Körpers (2) schwenkbar befestigt ist.

10. Tablet PC (1) nach einem der vorhergehenden Ansprüche, **dadurch gekennzeichnet, dass** die Standeinrichtung (31,32) über Drehgelenke (33,34) schwenkbar am Körper (2) befestigt ist.

11. Tablet PC (1) nach einem der vorhergehenden Ansprüche, **dadurch gekennzeichnet, dass** die Standeinrichtung (31,32) L-förmig mit einem langen Schenkel (31) und einem kurzen Schenkel (32) ausgebildet ist.

12. Tablet PC (1) nach einem der Ansprüche 1 bis 10, **dadurch gekennzeichnet, dass** die Standeinrichtung (31,32) L-förmig mit zwei gleich langen Schenkeln (31,32) ausgebildet ist.

13. Tablet PC (1) nach Anspruch 11 oder 12, **dadurch gekennzeichnet, dass** jeder Schenkel (31,32) mit seinem freien Ende schwenkbar am Körper (2) befestigt ist.

14. Tablet PC (1) nach einem der Ansprüche 11 bis 13, **dadurch gekennzeichnet, dass** die Längen der Schenkel (31,32) den Kantenlängen des Körpers (2) entsprechen.

15. Standeinrichtung (31,32) für einen Tablet PC (1) nach einem der vorhergehenden Ansprüche.
